# EUROPEAN PATENT APPLICATION

(11) **EP 4 524 469 A1**
(43) Date of publication of application: **19.03.2025**
(21) Application number: 24191487.8
(22) Date of filing: 29.07.2024
(51) Int. Cl.: F23R 3/14, F23R 3/28, F23R 3/50

(54) **A GAS TURBINE ENGINE AND FUEL NOZZLE THEREFOR**

(30) Priority: 18.09.2023 US 202318469187
(71) Applicant: General Electric Company, Cincinnati, Ohio 45215-6301 (US); GE Marmara Technology Center Muhendislik Hizmetleri Ltd, 41471 Gebze Kocaeli (TR); GE Aerospace Poland sp. z o.o., 02-256 Warszawa (PL)
(72) Inventor: DENIZ, Emrah, 41471 Gebze (TR); YASAR, Fatih, 41471 Gebze (TR); MIKO AJCZYK, Katarzyna Anna, 02-256 Warsaw (PL); BUCARO, Michael, Cincinnati, 45215-6301 (US); KACAR, Ahmet, 41471 Gebze (TR); WANG, Anquan, Cincinnati, 45215-6301 (US); LI, Hejie, Cincinnati, 45215-6301 (US); GONYOU, Craig Alan, Cincinnati, 45215-6301 (US); BRADY, Aaron, Cincinnati, 45215-6301 (US)
(74) Representative: Openshaw & Co.

(57) **Abstract**

A gas turbine engine (10) comprising: a combustion section (14) enshrouded by a casing (29), the combustion section (14) comprising: an annular combustion chamber (50) defined by at least a dome wall (46) and an annular liner (40); a plurality of combustor cups (31) circumferentially arranged on the dome wall (46); a fuel supply (34) connected to the casing (29); and a fuel nozzle (38) passing through the casing (29) and having a nozzle tube (70) and a distribution manifold (72) fluidly coupling the nozzle tube (70) to at least two combustor cups (31) of the plurality of combustor cups (31); wherein the fuel nozzle (38) is fixed to the at least two combustor cups (31).

## Description

### TECHNICAL FIELD

The present subject matter relates generally to a gas turbine engine having a fuel nozzle.

### BACKGROUND

Turbine engines are driven by a flow of combustion gases passing through the engine to rotate a multitude of turbine blades, which, in turn, rotate a compressor to provide compressed air to the combustor for combustion. A combustor can be provided within the turbine engine and is fluidly coupled with a turbine into which the combusted gases flow.

Historically, hydrocarbon fuels are used in the combustor of a turbine engine. Generally, air and fuel are fed to a combustion chamber, the air and fuel are mixed, and then the fuel is burned in the presence of the air to produce hot gas. The hot gas is then fed to a turbine where it cools and expands to produce power. By-products of the fuel combustion typically include environmentally unwanted byproducts, such as nitrogen oxide and nitrogen dioxide (collectively called NOₓ), carbon monoxide (CO), unburned hydrocarbons (UHC) (e.g., methane and volatile organic compounds that contribute to the formation of atmospheric ozone), and other oxides, including oxides of sulfur (e.g., SO₂ and SO₃).

To reduce the environmentally unwanted byproducts, other fuels, such as hydrogen, are being explored. Hydrogen or hydrogen mixed with another element has a higher flame temperature than traditional hydrocarbon fuels. That is, hydrogen or a hydrogen mixed fuel typically has a wider flammable range and a faster burning velocity than traditional hydrocarbon-based fuels.

### BRIEF DESCRIPTION OF THE DRAWINGS

In the drawings:
FIG. 1 is a schematic cross-sectional view of a turbine engine having a compression section, a combustion section, and a turbine section in accordance with various aspects described herein.
FIG. 2 is a schematic view of the combustion section of FIG. 1 along line II-II in accordance with various aspects described herein.
FIG. 3 is a schematic view illustrating portions of the combustion section of FIG. 2 along line III-III in accordance with various aspects described herein.
FIG. 4 is a sectional view illustrating portions of the combustion section of FIG. 3 along line IV-IV in accordance with various aspects described herein.
FIG. 5 is a partial sectional view illustrating portions of a combustion section in accordance with various aspects described herein.
FIG. 6 is an exploded perspective view illustrating portions of a combustion section in accordance with various aspects described herein.
FIG. 7A is a cross-sectional view illustrating portions of a tube of a nozzle in accordance with various aspects described herein.
FIG. 7B is a schematic view illustrating portions of a nozzle including an insulator in accordance with various aspects described herein.
FIG. 7C is a cross-sectional view illustrating portions of a tube of a nozzle in accordance with various aspects described herein.
FIG. 7D is a cross-sectional view illustrating portions of a tube of a nozzle in accordance with various aspects described herein.
FIG. 7E is a cross-sectional view illustrating portions of a tube of a nozzle in accordance with various aspects described herein.
FIG. 7F is a schematic view illustrating portions of a nozzles including an insulator in accordance with various aspects described herein.
FIG. 7G is a schematic view illustrating portions of a nozzles including an insulator in accordance with various aspects described herein.
FIG. 7H is a schematic view illustrating portions of a nozzles including an insulator in accordance with various aspects described herein.
FIG. 7I is a schematic view illustrating portions of a nozzles including an insulator in accordance with various aspects described herein.
FIG. 7J is a flow diagram illustrating a method of assembling a nozzle in accordance with various aspects described herein.
FIG. 8 is an axial view illustrating portions of a combustion section in accordance with various aspects described herein.
FIG. 9 is an axial view illustrating portions of a combustion section in accordance with various aspects described herein.
FIG. 10 is a partial axial view illustrating portions of a combustion section in accordance with various aspects described herein.
FIG. 11 is a partial axial view illustrating portions of a combustion section in accordance with various aspects described herein.
FIG. 12 is a partial axial view illustrating portions of a combustion section in accordance with various aspects described herein.
FIG. 13 is a flow diagram illustrating a method of assembling a turbine engine in accordance with various aspects described herein.

### DETAILED DESCRIPTION

Aspects of the disclosure described herein are directed to a combustor. For purposes of illustration, the present disclosure will be described with respect to a turbine engine. It will be understood, however, that aspects of the disclosure described herein are not so limited and that a combustor as described herein can be implemented in engines, including but not limited to turbojet, turboprop, turboshaft, and turbofan engines. Aspects of the disclosure discussed herein may have general applicability within non-aircraft engines having a combustor, such as other mobile applications and non-mobile industrial, commercial, and residential applications.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", and "third" may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid. The term "fluid communication" means that a fluid is capable of making the connection between the areas specified.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only the dimensions, positions, order and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

Uses of "and" and "or" are to be construed broadly. For example and without limitation, uses of "and" do not necessarily require all elements or features listed, and uses of "or" are inclusive unless such a construction would be illogical.

Approximating language, as used herein throughout the specification and claims, is applied to modify any quantitative representation that could permissibly vary without resulting in a change in the basic function to which it is related. Accordingly, a value modified by a term or terms, such as "about", "approximately", "generally", and "substantially", are not to be limited to the precise value specified. In at least some instances, the approximating language may correspond to the precision of an instrument for measuring the value, or the precision of the methods or machines for constructing or manufacturing the components and systems. In at least some instances, the approximating language may correspond to the precision of an instrument for measuring the value, or the precision of the methods or machines for constructing or manufacturing the components and systems. For example, the approximating language may refer to being within a 1, 2, 4, 5, 10, 15, or 20 percent margin in either individual values, range(s) of values and endpoints defining range(s) of values. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

"Proximate" as used herein is not limiting, rather a descriptor for locating parts described herein. Further, the term "proximate" means nearer or closer to the part recited than the following part. For example, a first hole proximate a wall, the first hole located upstream from a second hole means that the first hole is closer to the wall than the first hole is to the second hole.

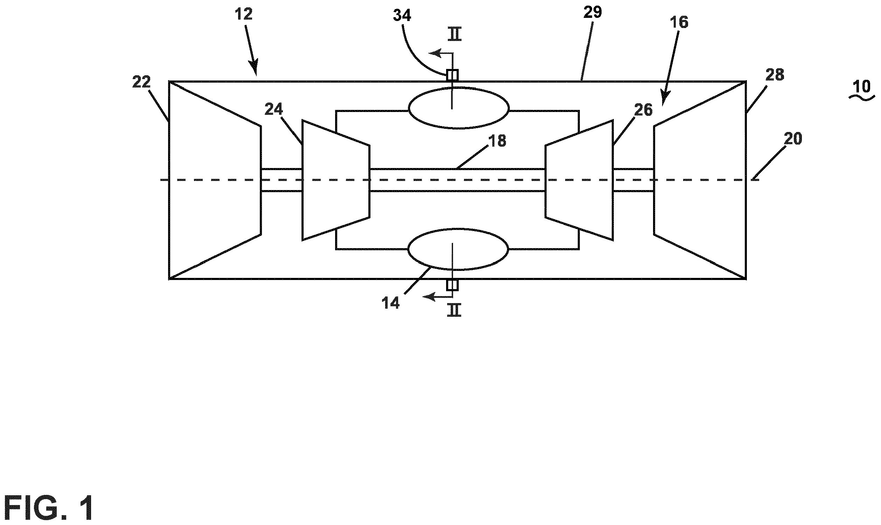

FIG. 1 is a schematic view of a turbine engine 10. As a non-limiting example, the turbine engine 10 can be used within an aircraft. The turbine engine 10 can include, at least, a compressor section 12, a combustion section 14, and a turbine section 16. A drive shaft 18 rotationally couples the compressor section 12 and turbine section 16, such that rotation of one affects the rotation of the other, and defines a rotational axis 20 for the turbine engine 10.

The compressor section 12 can include a low-pressure (LP) compressor 22, and a highpressure (HP) compressor 24 serially fluidly coupled to one another. The turbine section 16 can include an HP turbine 26, and an LP turbine 28 serially fluidly coupled to one another. The drive shaft 18 can operatively couple the LP compressor 22, the HP compressor 24, the HP turbine 26 and the LP turbine 28 together. Alternatively, the drive shaft 18 can include an LP drive shaft (not illustrated) and an HP drive shaft (not illustrated). The LP drive shaft can couple the LP compressor 22 to the LP turbine 28, and the HP drive shaft can couple the HP compressor 24 to the HP turbine 26. An LP spool can be defined as the combination of the LP compressor 22, the LP turbine 28, and the LP drive shaft such that the rotation of the LP turbine 28 can apply a driving force to the LP drive shaft, which in turn can rotate the LP compressor 22. An HP spool can be defined as the combination of the HP compressor 24, the HP turbine 26, and the HP drive shaft such that the rotation of the HP turbine 26 can apply a driving force to the HP drive shaft which in turn can rotate the HP compressor 24.

The compressor section 12 can include a plurality of axially spaced stages. Each stage includes a set of circumferentially-spaced rotating blades and a set of circumferentially-spaced stationary vanes. The compressor blades for a stage of the compressor section 12 can be mounted to a disk, which is mounted to the drive shaft 18. Each set of blades for a given stage can have its own disk. The vanes of the compressor section 12 can be mounted to a casing which can extend circumferentially about the turbine engine 10. It will be appreciated that the representation of the compressor section 12 is merely schematic and that there can be any number of blades, vanes and stages. Further, it is contemplated that there can be any number of other components within the compressor section 12.

Similar to the compressor section 12, the turbine section 16 can include a plurality of axially spaced stages, with each stage having a set of circumferentially-spaced, rotating blades and a set of circumferentially-spaced, stationary vanes. The turbine blades for a stage of the turbine section 16 can be mounted to a disk which is mounted to the drive shaft 18. Each set of blades for a given stage can have its own disk. The vanes of the turbine section 16 can be mounted to the casing in a circumferential manner. It is noted that there can be any number of blades, vanes and turbine stages as the illustrated turbine section 16 is merely a schematic representation. Further, it is contemplated that there can be any number of other components within the turbine section 16.

The combustion section 14 can be provided serially between the compressor section 12 and the turbine section 16. The combustion section 14 can be fluidly coupled to at least a portion of the compressor section 12 and the turbine section 16 such that the combustion section 14 at least partially fluidly couples the compressor section 12 to the turbine section 16. As a non-limiting example, the combustion section 14 can be fluidly coupled to the HP compressor 24 at an upstream end of the combustion section 14 and to the HP turbine 26 at a downstream end of the combustion section 14.

During operation of the turbine engine 10, ambient or atmospheric air is drawn into the compressor section 12 via a fan (not illustrated) upstream of the compressor section 12, where the air is compressed defining a pressurized air. The pressurized air can then flow into the combustion section 14 where the pressurized air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the turbine engine 10 via an exhaust section (not illustrated) downstream of the turbine section 16. The driving of the LP turbine 28 drives the LP spool to rotate the fan (not illustrated) and the LP compressor 22. The pressurized airflow and the combustion gases can together define a working airflow that flows through the fan, compressor section 12, combustion section 14, and turbine section 16 of the turbine engine 10.

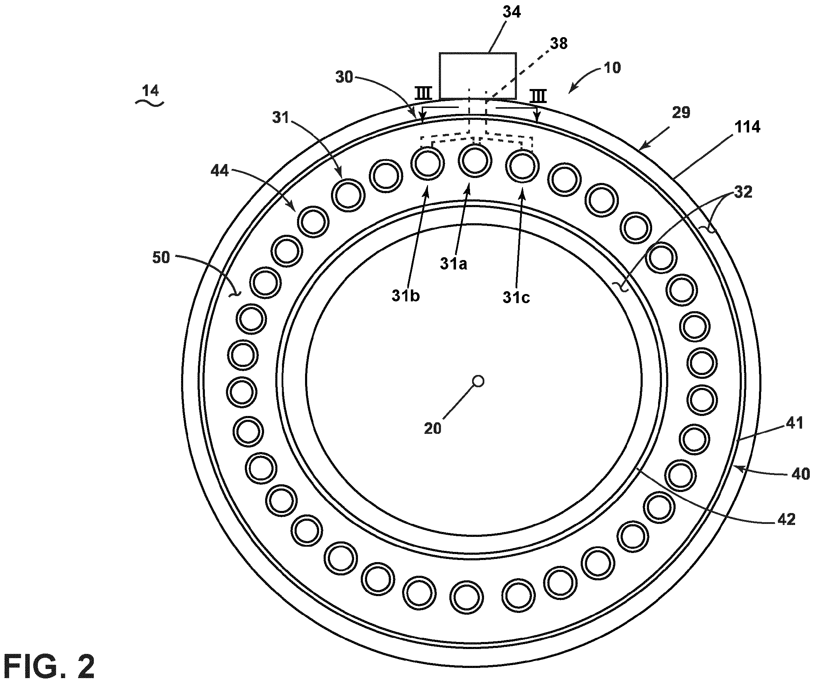

FIG. 2 depicts a cross-sectional view of the combustion section 14 along line II-II of FIG. 1. The combustion section 14 can include a combustor 30 with an annular arrangement of combustor cups 31 disposed around the centerline or rotational axis 20 of the turbine engine 10. The combustor 30 can have a can, can-annular, or annular arrangement depending on the type of engine in which the combustor 30 is located. In a non-limiting example, the combustor 30 can have a combination arrangement located with a casing 29 of the engine.

The combustor 30 can be at least partially defined by a combustor liner 40. In some examples, the combustor liner 40 can include an outer liner 41 and an inner liner 42 concentric with respect to each other and arranged in an annular fashion about the engine centerline or rotational axis 20. In some examples, the combustor liner 40 can have an annular structure about the combustor 30. In some examples, the combustor liner 40 can include multiple segments or portions collectively forming the combustor liner 40. In some examples, the combustor liner 40 can have an annular structure about the combustor 30. In some examples, the combustor liner 40 can include multiple segments or portions collectively forming the combustor liner 40. In some examples, the combustor liner 40 can include the outer liner 41 radially spaced from the inner liner 42. In some examples, the combustor liner 40 can include a single liner.

A dome assembly 44 together with the combustor liner 40 can at least partially define a combustion chamber 50 arranged annularly about the rotational axis 20. For example, a dome wall 46 of the dome assembly 44 can be substantially perpendicular to the rotational axis 20 and can cooperate with the outer liner 41, the inner liner 42, or both, to at least partially define the combustion chamber 50. A compressed air passage 32 can be defined at least in part by both the combustor liner 40 and the casing 29.

The combustor 30 can include or is connected to a fuel supply 34 (e.g., an external fuel manifold). The fuel supply 34 can be connected to an outer surface 114 of the casing 29. The nozzles 38 fluidly couple the fuel supply 34 with the combustor cups 31 and the combustion chamber 50. The fuel F can include any suitable fuel, including hydrocarbon fuel or hydrogen fuel in non-limiting examples. The combustor cups 31 can be separately connected to the dome wall 46. For example and without limitation, the combustor cups 31 can be connected to the dome wall 46 in a circumferentially spaced configuration. The combustor cups 31 can be disposed at a radial distance from the rotational axis 20 that is greater than a radial distance of the inner liner 42 and less than a radial distance of the outer liner 41. The dome wall 46 can include an aperture 48 for each combustor cup 31. Additionally or alternatively, each combustor cup 31 can include a respective portion of the dome wall 46 having a respective aperture 48.

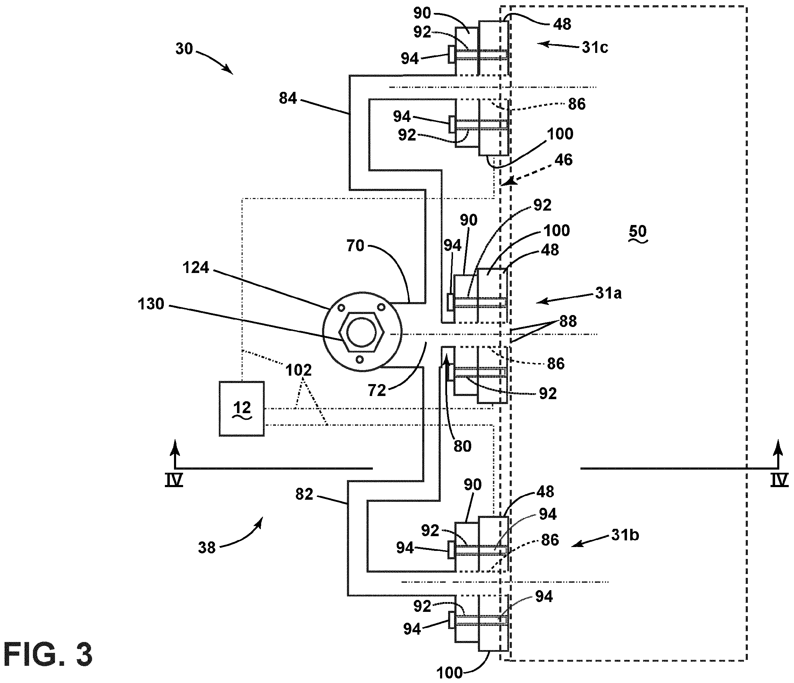

FIG. 3 depicts a fuel nozzle 38 connected to a combustion chamber 50. The fuel nozzle 38 can include a nozzle tube 70 and a distribution manifold 72. The nozzle tube 70 can be fluidly coupled to the fuel supply 34. The nozzle tube 70 can provide fuel F received by the fuel nozzle 38 (e.g., from a fuel supply 34) to the distribution manifold 72. The distribution manifold 72 can include a plurality of manifold tubes, such as a first manifold tube 80, a second manifold tube 82, a third manifold tube 84, and additional manifold tubes, that may each fluidly couple the nozzle tube 70 to a respective combustor cup 31, such as a first combustor cup 31a, a second combustor cup 31b, and a third combustor cup 31c, respectively. For example and without limitation, the distribution manifold 72 and the manifold tubes 80-84 can fluidly couple a single nozzle tube 70 and a single outlet of the fuel supply 34 to a plurality of combustor cups 31 and the combustion chamber 50. The manifold tubes 80-84 can include nozzle tips 86 disposed at their distal ends. The nozzle tips 86 can include one or more openings 88 that allow fuel F to exit the fuel nozzle 38 and enter the combustion chamber 50.

In an example aspect, a combustor cup 31 includes or is fluidly coupled with a swirler 100. The swirler 100 can be provided at or about the dome wall 46 and, in some instances, can be disposed at least partially in a dome wall aperture 48. The swirler 100 can swirl incoming air 102, such as compressed air from the compressor section 12, in proximity of fuel F exiting the nozzle tips 86, which may facilitate a homogeneous mixture of air and fuel entering the combustor 30. In some configurations, the swirler 100 is fixed (e.g., rigidly, permanently) to the dome wall 46. For example, the swirler 100 can be rigidly fixed to the dome wall 46 via welding, brazing, fasteners, or a combination thereof.

In some examples, a swirler 100 is connected to and at least partially surrounds each manifold tube 80-84 and nozzle tip 86. For example, the nozzle tips 86 may extend into and through respective swirlers 100. With some configurations, the manifold tubes 80-84 are rigidly fixed (e.g., bolted, brazed, welded, riveted, fastened, etc.) to the swirlers 100 such that the fuel nozzle 38 is rigidly fixed to the swirlers 100 (e.g., first, second, and third swirlers 100). For example, the manifold tubes 80-84 can each include a flange 90 (e.g., a mounting flange) at their distal ends adapted for being fixed to a respective swirler 100. The flanges 90 can include one or more flange apertures 92 that can receive fasteners 94 (e.g., bolts) to fasten the flanges 90 to the swirlers 100. Fixing the flanges 90 to the swirlers 100, which may be rigidly fixed (e.g., bolted, brazed, welded, riveted, fastened, etc.) to the dome wall 46, may provide a configuration in which the nozzle tips 86, the swirlers 100, and the dome wall apertures 48 are fixed in concentric positions, which may provide consistent flame distribution in the combustion chamber 50. In other designs, with floating connections between nozzles and dome walls, the nozzles can move, at least to some degree, relative to the dome wall, which can provide inconsistent flame distribution.

Some fuels, such as hydrogen, are particularly sensitive to interactions with oxidizers, so misalignment between the nozzle tips 86, the swirlers 100, and the dome wall apertures 48 could have significant and undesired effects on flame distribution. Fixing the nozzle tips 86, the swirlers 100, and the dome wall apertures 48 relative to each other in a proper alignment (e.g., in a concentric configuration) may limit or eliminate such undesired effects on flame distribution.

A fuel nozzle 38 may provide fuel F to a plurality of combustor cups 31 via a single hole 110 in the casing 29. Other designs include one hole in a casing for each fuel cup (1 hole : 1 cup). Such designs may be feasible for certain fuels, such as liquid fuels, but such designs may be less feasible or not feasible for other fuels, such as less-dense gas fuels (e.g., hydrogen). Less-dense fuels may dictate that larger volumes of fuel are provided to combustion chambers. In the other designs, simply increasing the size of each of the large number of holes (e.g., at least one for each fuel cup) could weaken the casing. With aspects of the current disclosure, the number of holes 110 in the casing 29 is reduced compared to such other designs (e.g., 1 hole : 2 or more cups), while the size of those holes 110 is increased, maintaining the strength of the casing 29. For example, the circumferential distance between adjacent holes 110 may be significantly greater compared to designs with one hole for each cup. Some other designs may also include oversized casing holes to allow for removal for a nozzle from a casing. With the instant design, the casing 29 may not include any such oversized casing holes. For example, the casing holes 110 may be just large enough for the inlet of the nozzle tube 70 to extend into/through and may not be large enough for the whole fuel nozzle 38 to pass through.

According to an aspect of the present disclosure, an inner diameter of the nozzle tube 70 can be greater than the inner diameter of the manifold tubes 80-84. A proximal end of the nozzle tube 70 can be connected to the fuel supply 34. The distribution manifold 72 and the manifold tubes 80-84 can be connected at or about a distal end of the nozzle tube 70. The distribution manifold 72 may be disposed proximate the first combustor cup 31a and a first swirler 100, which may allow for the first manifold tube 80 to be significantly shorter than the other manifold tubes 82, 84. For example and without limitation, the length of the first manifold tube 80 may be 10% or less than the lengths of the other manifold tubes 82, 84, which may or may not be the same or similar. In some configurations, the manifold tubes 80-84 may connect to the nozzle tube 70 in close proximity to each other, which may provide a mixing effect and result in the distribution manifold 72 functioning, at least to some extent, as a mixing chamber.

With some examples, the nozzle tube 70 can be disposed generally in the middle of the fuel nozzle 38 and may be generally circumferentially aligned with a middle one of the plurality of combustor cups 31 to which the fuel nozzle 38 is connected. The manifold tubes 82, 84 can extend from opposite sides of the distribution manifold 72 and generally in opposite circumferential directions.

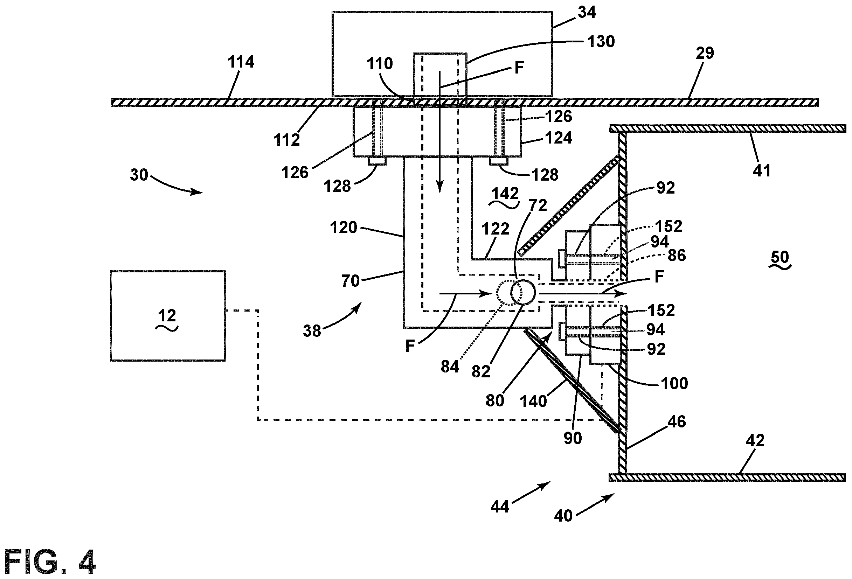

FIG. 4 depicts the fuel nozzle 38 connected to the casing 29, the fuel supply 34, and the combustor cups 31 that are connected to the dome wall 46. In some examples, the dome wall 46 can be substantially annular and substantially perpendicular to at least some portions of the casing 29, but can include other configurations. The nozzle tube 70 can include a generally L-shaped configuration. For example, a first section 120 of the nozzle tube 70 may extend generally radially inward from the casing 29 and the fuel supply 34, and a second section 122 of the nozzle tube 70 may extend generally axially from the first section 120 toward the dome wall 46. The first section 120 may be substantially perpendicular to the nozzle tips 86.

According to an aspect of the present disclosure, the nozzle tube 70 can include a nozzle tube flange 124 disposed at a proximal end of the first section 120. The nozzle tube flange 124 may be adapted to be rigidly fixed (e.g., bolted, brazed, welded, riveted, fastened, etc.) to an inner surface 112 of the casing 29 and to the fuel supply 34. For example and without limitation, the nozzle tube flange 124 can include one or more nozzle tube flange apertures 126 that can receive fasteners 128 (e.g., bolts) to fasten the nozzle tube flange 124 to the casing 29 and the fuel supply 34. The nozzle tube flange 124 can, for example and without limitation, include a cylindrical configuration and may directly abut/contact the inner surface 112 of the casing 29. In some configurations, the fuel nozzle 38 is attached (e.g., rigidly fixed) to the casing 29 at the nozzle tube flange 124 and is not otherwise attached to the casing 29 (e.g., does not include separate/additional attaching components). A coupling 130 can include the nozzle tube flange 124, the fasteners 128, or both. A portion of the nozzle tube 70 may extend into and pass through the casing 29, such as to fluidly couple with the fuel supply 34.

In some configurations, the fuel nozzle 38 can be bolted to the inner surface 112 of the casing 29 and is bolted to a plurality of combustor cups 31, which may facilitate maintaining relative positions (e.g., concentricity) of the nozzle tips 86, the swirlers 100, and the dome wall 46, which may provide consistent flame distribution. With some examples, the fuel nozzle 38 may not be removable through the casing 29 and may not be configured as a line replaceable unit.

According to an aspect of the present disclosure, the dome assembly 44 can include an extension 140. The extension 140 can extend generally axially forward and taper radially inward and may at least partially cover and enclose the fuel nozzle 38 and the swirlers 100.

With some configurations, the space 142 around the nozzle tube 70 and the manifold tubes 80-84 is closed, at least to some degree, and at vacuum, such as to limit air movement around the tubes 70, 80-84. Limiting air movement may thermally insulate the tubes 70, 80-84, at least to some extent.

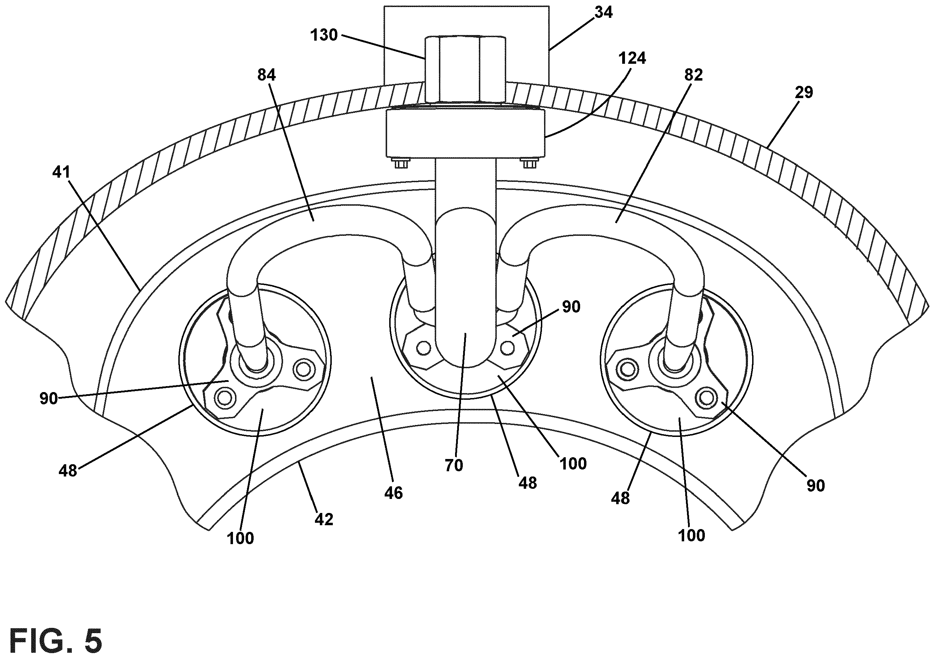

As shown in FIG. 5, the fuel nozzle 38 can be rigidly fixed (e.g., bolted, brazed, welded, riveted, fastened, etc.) to the inner surface 112 of the casing 29, such as via a coupling 130, and rigidly fixed (e.g., bolted, brazed, welded, riveted, fastened, etc.) to a plurality of combustor cups 31. The outer liner 41 can be disposed at a first radial distance from the rotational axis 20. The inner liner 42 can be disposed a second radial distance from the rotational axis 20. The combustor cups 31 can be disposed at a third radial distance from the rotational axis 20 that is less than the first radial distance and greater than the second radial distance. Some or all of the manifold tubes 82, 84 can between disposed at a fourth radial distance that is less than the first radial distance and greater than the second radial distance. The casing 29 and the combustor liner 40, including the outer liner 41 and the inner liner 42, can include annular configurations.

In some configurations, one or more manifold tubes, such as the second manifold tube 82 and the third manifold tube 84, can include a curved configuration, a U-shaped configuration, or both. The U-shaped configuration may, for example, open generally axially rearward.

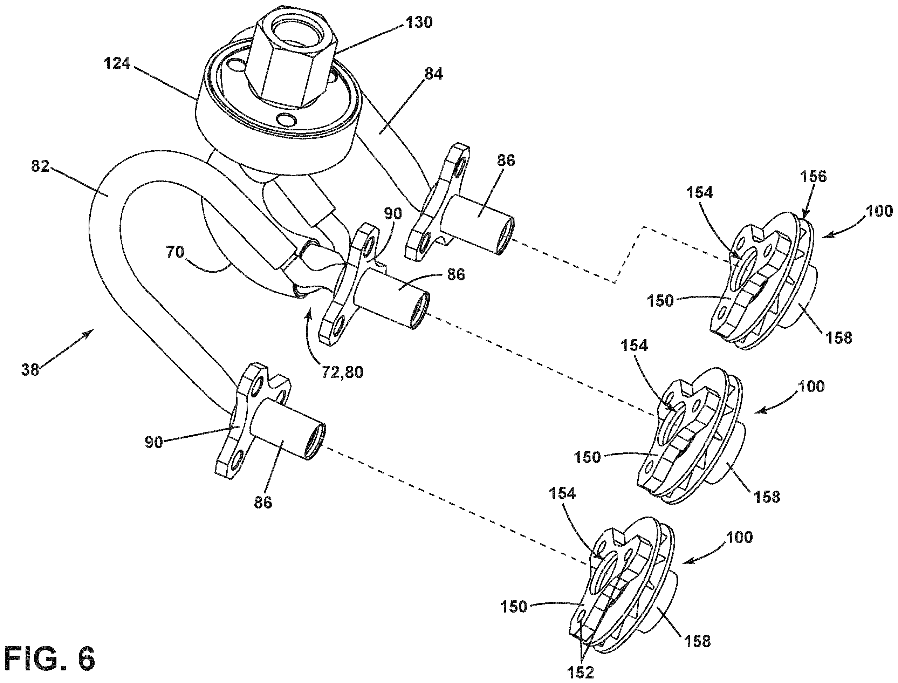

According to some aspects of the current disclosure, such as generally illustrated in FIG. 6, a shape of the flanges 90 can correspond to a shape of a mating surface 150 of the swirlers 100. For example, the flanges 90 can have a shape that resembles a 3-pointed star (e.g., with three tabs extending radially outward and circumferentially spaced from each other) and the swirlers 100 can include a raised mating surface 150 that has the same or similar shape (e.g., 3-pointed star). The mating surface 150 can include mating apertures 152 that are aligned with corresponding flange apertures 92 of the flanges 90. In some configurations, the mating apertures 152 are threaded to engage the fasteners 94 and secure the flanges 90 with the swirlers 100. The apertures 152 may not be through apertures. A swirler 100 can have a central aperture 154 that can be aligned with a center of the swirler 100 and can at least partially receive a manifold tube 80-84, a nozzle tip 86 connected thereto, or a combination thereof. In some configurations, the nozzle tip 86 extends through and not beyond the swirler 100 such that the distal end of the nozzle tip 86 is aligned with the distal end of the swirler 100. The swirler 100 can include one or more air inlets 156 that can receive air 102, such as compressed air from the compressor section 12. The swirler 100 can include a mounting surface 158 that can be connected (e.g., rigidly fixed/mounted) to the dome wall 46. For example and without limitation, the mounting surface 158 can be a cylindrical surface that can be inserted into a dome wall aperture 48 and brazed or welded to the dome wall 46. The nozzle 38 and the manifold tubes 80-84 thereof can be rigidly fixed (e.g., bolted, brazed, welded, riveted, fastened, etc.) to the combustor cups 31 and the dome wall 46 via the swirlers 100.

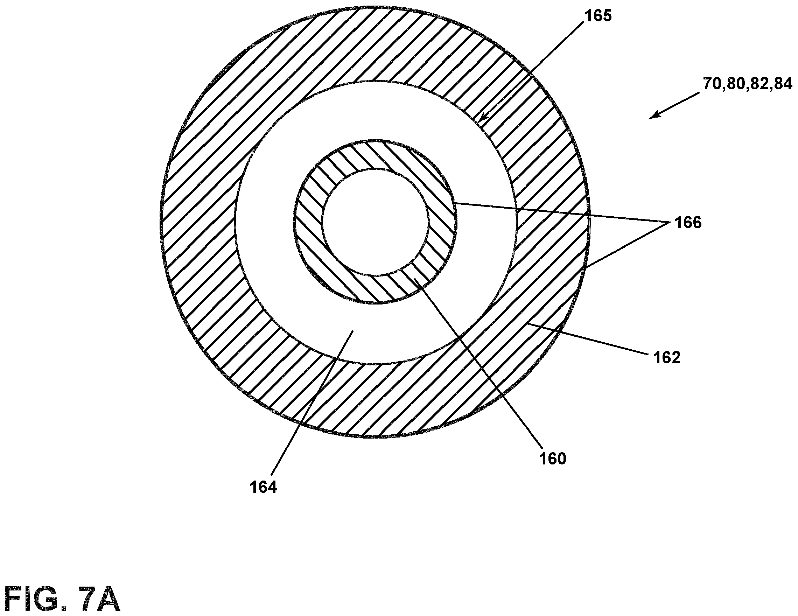

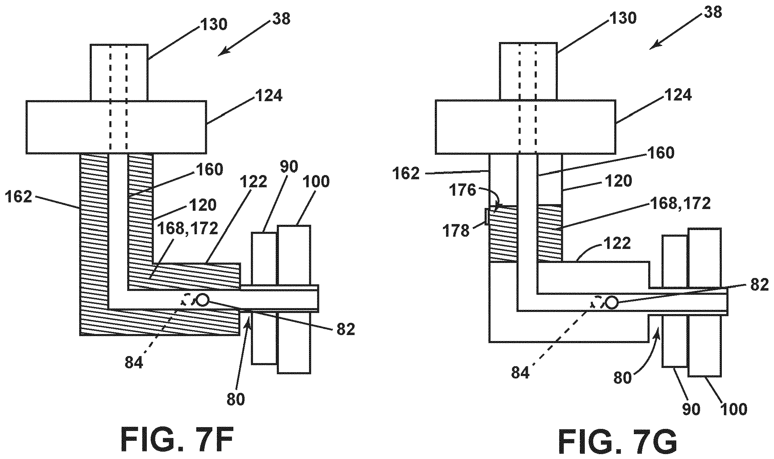

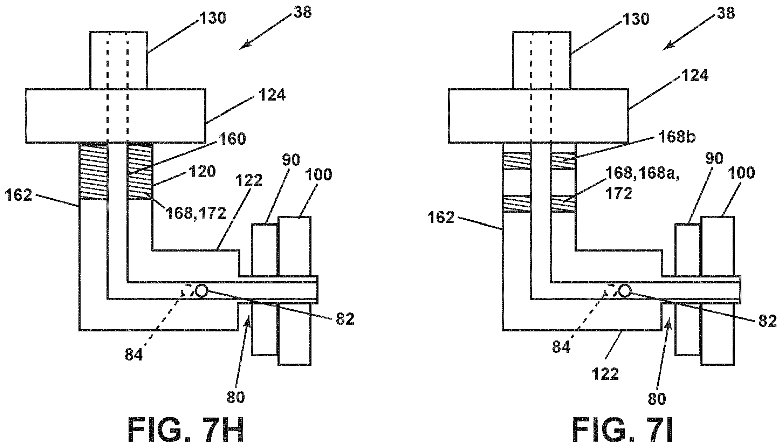

According to some aspects of the current disclosure, such as generally illustrated in FIGS. 7A-7I, a fuel nozzle 38, the nozzle tube 70, one or more manifold tubes 80-84, or a combination thereof can be thermally insulated, such as via an insulator 168. A tube 70, 80-84 can include a dual wall configuration with an inner wall 160 and an outer wall 162 spaced radially outward from the inner wall 160 to define an inner space 164. The outer wall 162 may define an outer wall space 165. The inner wall 160 may be disposed in the outer wall space 165. The inner space 164 may comprise a portion of the outer wall space 165.

In some examples, the nozzle tube 70 can include an inner wall 160, an outer wall 162, and an insulator 168. Additionally or alternatively, at least one manifold tube 80-84 can include an inner wall 160, an outer wall 162, and an insulator 168 disposed between the inner wall 160 and the outer wall 162.

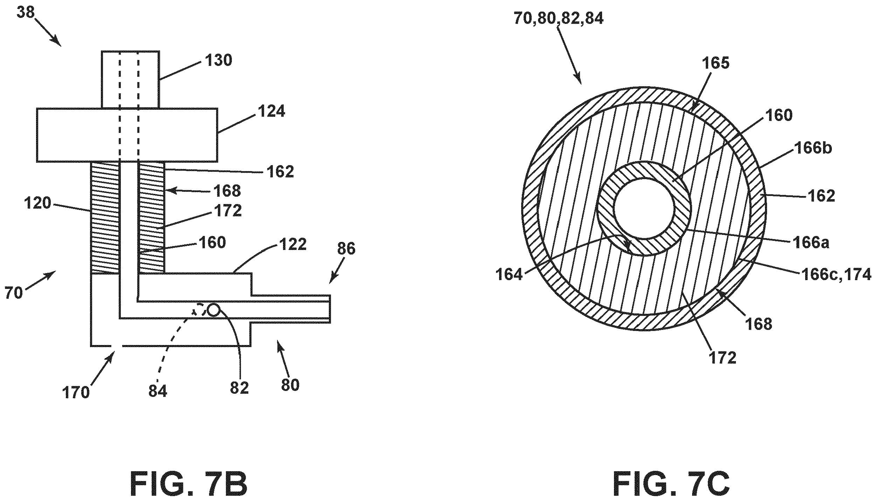

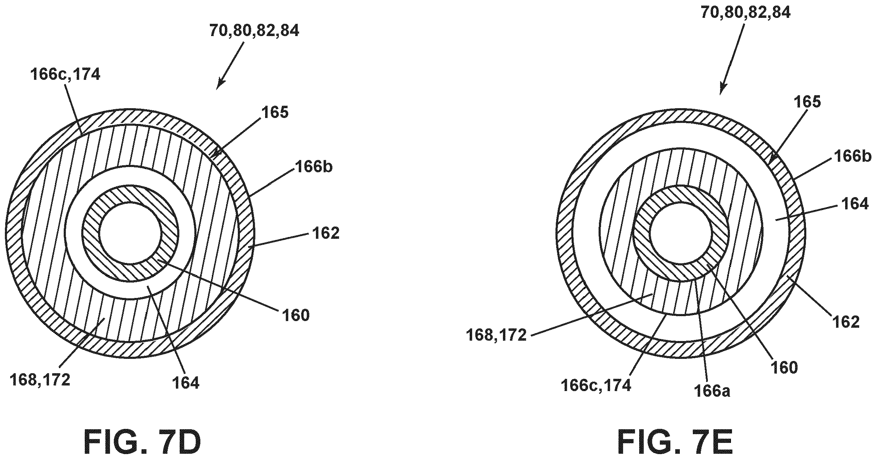

As generally illustrated in FIGS. 7B-7H, the inner space 164 can, in some instances, be filled at least partially with an insulator 168, at least partially at vacuum, or a combination thereof. The insulator 168 can comprise one or more insulating materials 172, such as air, gas, liquid, aerogel, fiberglass, honeycomb structures, or a combination thereof, that can thermally insulate one or more portions of a nozzle 38. The one or more insulating materials 172 may comprise fire-resistant materials, such as microporous materials, endothermic microporous materials, quilted microporous materials, ceramics, aerogels, or a combination thereof. In some configurations, sections of the insulator 168 can be in contact with the outer wall 162 and may not be in contact with the inner wall 160 (see, e.g., FIG. 7D), which may result in a portion of the inner space 164 being open between the insulator 168 and the inner wall 160. Additionally or alternatively, sections of the insulator 168 can be in contact with the inner wall 160 and may not be in contact with the outer wall 162 (see, e.g., FIG. 7E), which may result in a portion of the inner space 164 being open between the insulator 168 and the outer wall 162. Additionally alternatively, sections of the insulator 168 can be in contact with both of the inner wall 160 and the outer wall 162 (see, e.g., FIGS. 7B, 7C, 7F-7I), which may result in at least portions of the inner space 164 being filled between the inner and outer walls 160, 162.

With some examples, the fuel nozzle 38 can include a fluid opening 170 and the insulator 168 can be disposed to restrict fluid flow from the fluid opening 170 in the inner space 164. For example, during operation of the turbine engine 10, hot air may flow into the fuel nozzle 38 through the fluid opening 170, and the insulator 168 may restrict flow of the hot air into the inner space 164, within the inner space 164, or both. Restricting the flow of hot air can limit heating of fuel flowing through the fuel nozzle 38 (e.g., within the inner wall 160), such as via reducing convection.

In some examples, an insulator 168 can include an insulating material 172 (e.g., a thermally insulating material) connected to a shell 174. The shell 174 may, for example, comprise metal. Additionally or alternatively, the shell 174 and the outer wall 162 may comprise a common material. The shell 174 may function as a substrate for the insulating material 172. Additionally or alternatively, the insulating material 172 may be formed on, applied to, or adhered to (or a combination thereof) to the shell 174. In some configurations, the shell 174 can be in contact with the outer wall 162, the inner wall 160, both, or neither.

In some examples, a tube 70, 80-84 can include a thermal barrier coating (TBC) 166. For example, an inner wall 160 can include a TBC 166a, an outer wall 162 can include a TBC 166b, a shell 174 can include a TBC 166c, or a combination thereof. A TBC 166a-c can be applied to or disposed on the inner surface, the outer surface, or both, of the inner wall 160, the outer wall 162, and the shell 174.

With some aspects, the fuel nozzle 38 (e.g., the outer wall 162) can include an injection orifice 176 for receiving an insulating material 172 of the insulator 168. The injection orifice 176 can be fluidly coupled to the inner space 164. The fuel nozzle 38 can includes a cap 178 fluidly sealing the injection orifice 176 (e.g., after injection).

In some examples, such as generally illustrated in FIG. 7I, the insulator 168 can includes a plurality of separate sections 168a, 168b. The sections 168a, 168b can, for example, comprise one or more discs or other shapes spaced from each other in the inner space 164.

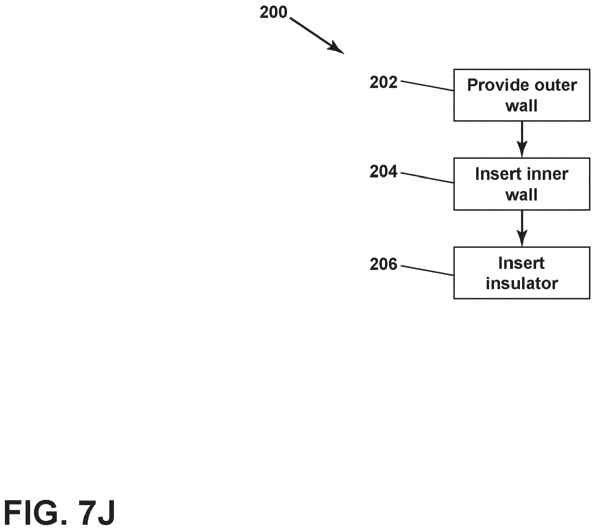

Referring to FIG. 7J, a method 200 of assembling a fuel nozzle 38 can include providing an outer wall 162 defining an outer wall space 165. The method 200 can include inserting the inner wall 160 into the outer wall space 165 (block 204) and inserting the insulator 168 into the outer wall space 165 (block 206). With some examples, the insulator 168 can be inserted into the outer wall space 165 before the inner wall 160. In other examples, the inner wall 160 can be inserted into the outer wall space 165 before the insulator 168. For example, the inner wall 160 and the outer wall 162 can define an inner space 164 and the insulator 168 can be inserted into the inner space 164. Inserting the insulator 168 can include injecting the insulating material 172 of the insulator 168 into the inner space 164 between the inner wall 160 and the outer wall 162, such as via an injection orifice 176. Inserting the insulator 168 into the outer wall 162 can include inserting the insulating material 172 and the shell 174 into the outer wall space 165. Providing the outer wall 162 can include applying a thermal barrier coating 166b to the outer wall 162. The inner wall 160 can include a thermal barrier coating 166a.

One or more portions of the method 200 can be repeated or conducted in parallel for other sections (e.g., tubes 70, 80-84) of a fuel nozzle 38.

The behavior of fuels during combustion may vary with temperature of the fuel and some fuels may be more sensitive to temperature changes than others. Thermally insulating the fuel nozzle 38, such as the tubes 70, 80-84, can reduce temperature changes (e.g., increases) of fuel in the fuel nozzle 38. With some fuels, for example and without limitation, it may be desirable to maintain fuel temperatures significantly lower than compressor discharge air. At least some air temperatures in the turbine engine 10 can exceed 1000 degrees Fahrenheit, so thermally insulating the tubes 70, 80-84 can limit the fuel temperature increasing effects of such hot air.

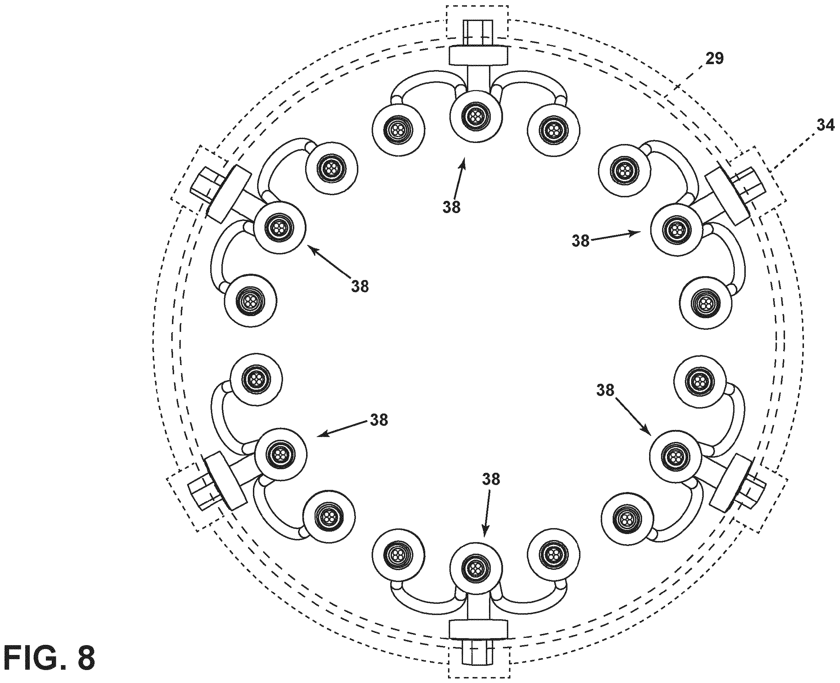

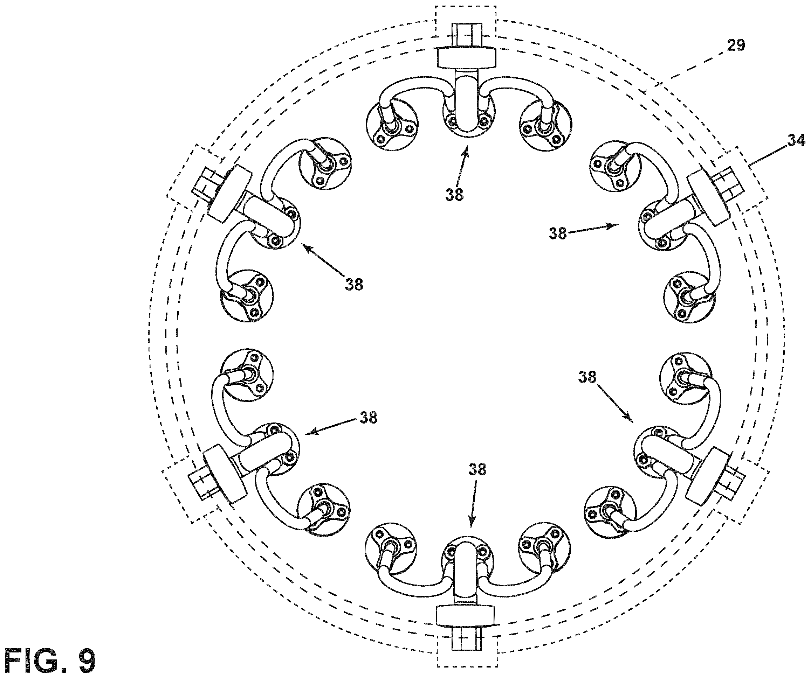

According to some aspects of the current disclosure, such as generally illustrated in FIGS. 8 and 9, a combustion section 14 can include a plurality of nozzles 38 that are each fluidly coupled to the fuel supply 34 and a plurality of combustor cups 31. For example and without limitation, some configurations can include eighteen (18) combustor cups 31 with six fuel nozzles 38 each connected to a respective three of the combustor cups 31. However, the instant disclosure is not limited to any particular number of combustor cups 31 or nozzles 38. The number of casing holes 110 (e.g., holes through which fuel flows) may be equal to the number of nozzles 38, which may be half or less than the number of combustor cups 31. In one example, a combustion section 14 can include a first fuel nozzle 38 fluidly coupled to the fuel supply 34 and at least two combustor cups 31, and can include one, two, or at least two additional fuel nozzles 38 each fluidly coupled to the fuel supply 34 and to at least two respective additional combustor cups 31. The nozzle 38 can be coupled to the casing 29, the fuel supply 34, or both via a coupling 130.

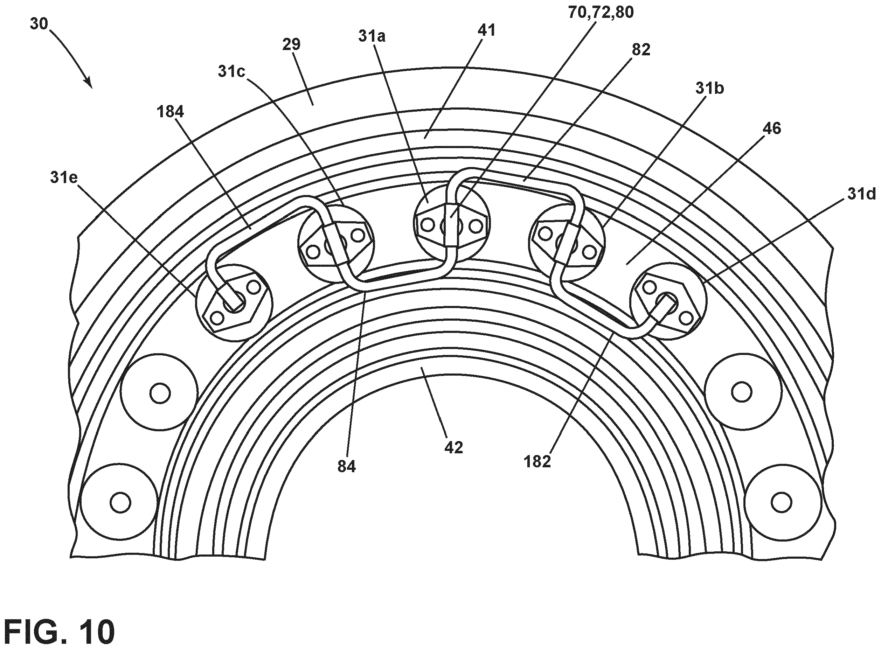

According to some aspects of the current disclosure, such as generally illustrated in FIGS. 10-12, a fuel nozzle 38 can be connected to other numbers of combustor cups 31 (e.g., combustor cups 31a-31e), such as at least four combustor cups 31. One non-limiting example could include a combustion section 14 with 20 total combustor cups 31 and four fuel nozzles 38 each fluidly coupled to five combustor cups 31. The nozzles 38 can include additional manifold tubes for each additional combustor cup 31, such as manifold tubes 182, 184. The manifold tubes 182, 184 can, for example, be connected to ends of manifold tubes 82, 84, respectively, and fluidly coupled to respective additional swirlers 100. The additional manifold tubes 182, 184 can include smaller diameters than the nozzle tube 70 and the manifold tubes 80-84.

In another non-limiting example, a first fuel nozzle 38 is fluidly coupled and rigidly fixed (e.g., bolted, brazed, welded, riveted, fastened, etc.) to a first set of combustor cups 31 comprising at least four combustor cups 31, the combustion section comprises a first set of swirlers 100 comprising a swirler 100 for each combustor cup 31 of the first set of combustor cups 31; and the fuel nozzle 38 is rigidly fixed (e.g., bolted, brazed, welded, riveted, fastened, etc.) to each of the swirlers 100 of the first set of swirlers 100.

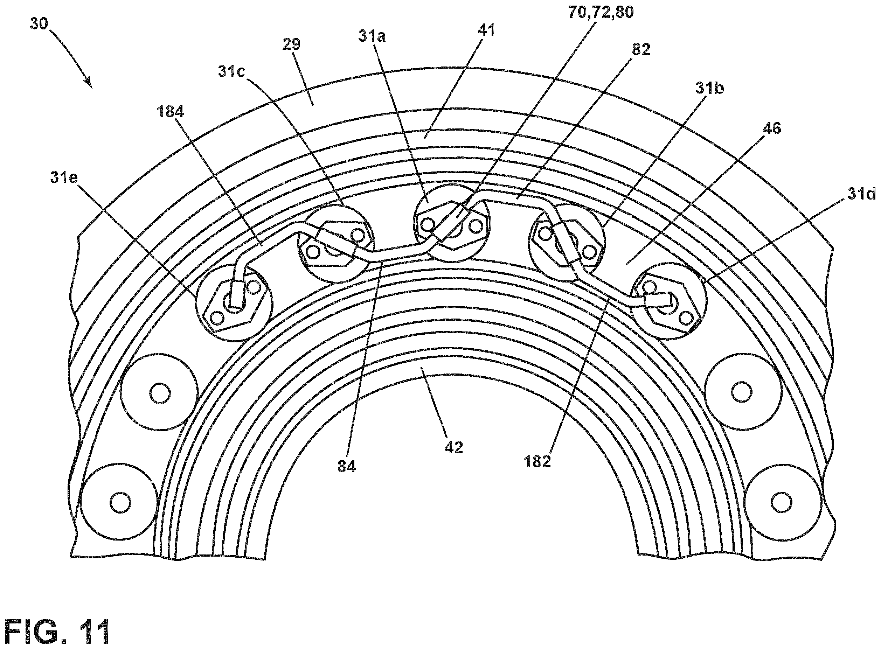

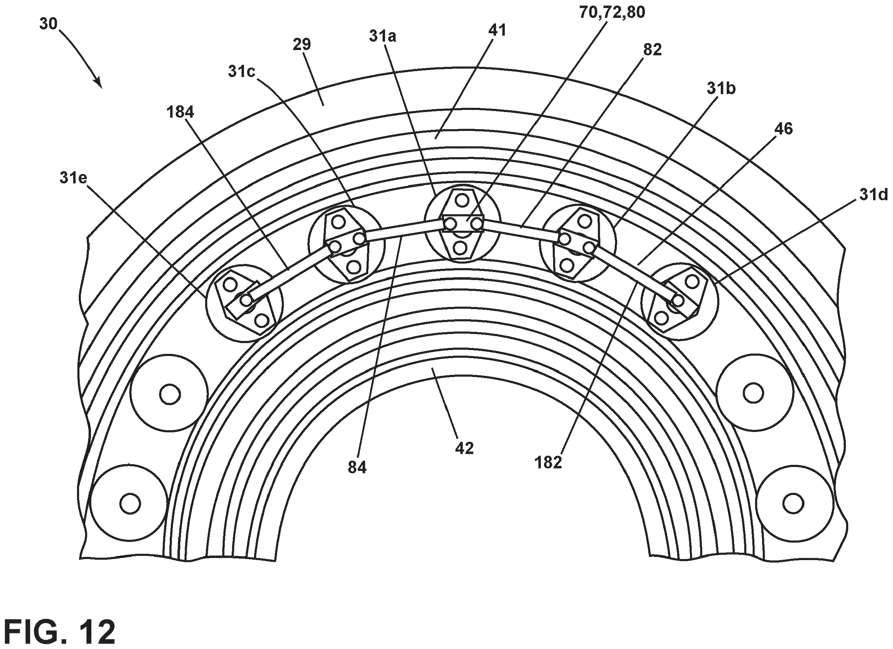

As shown in FIGS. 10 and 11, the manifold tubes 82, 84, 182, 184 can, in some configurations, include alternating U-shaped configurations that are substantially parallel to the dome wall 46. As shown in FIG. 10, the manifold tubes 82, 84, 182, 184 can include substantially right angles with rounded corners. Additionally or alternatively, as shown in FIG. 11, the manifold tubes 82, 84, 182, 184 can include oblique angles (e.g., obtuse angles). Additionally or alternatively, as shown in FIG. 12, the manifold tubes 82, 84, 182, 184 can be linear, among other various configurations.

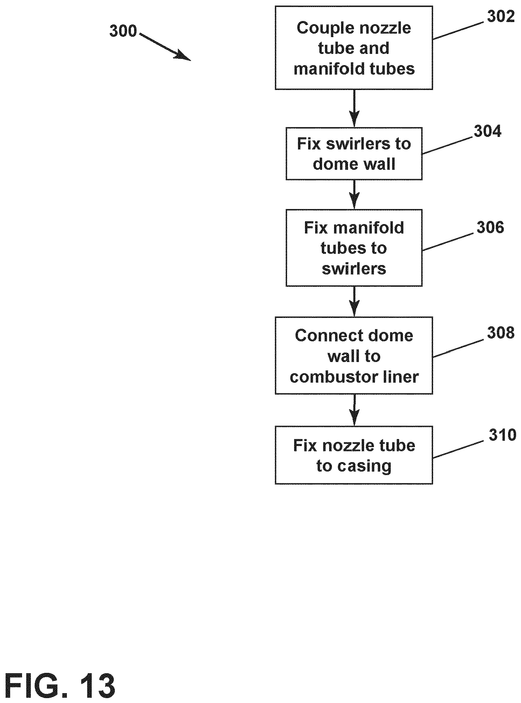

Referring to FIG. 13, a method 300 of assembling a gas turbine engine 10 can include coupling a nozzle tube 70 and manifold tubes 80-84 to at least partially form a fuel nozzle 38, (block 302), fixing (e.g., rigidly fixing) a plurality of swirlers 100 to a dome wall 46 of a dome assembly 44 (block 304), fixing (e.g., rigidly fixing) manifold tubes 80-84 of a fuel nozzle 38 to the plurality of swirlers 100 to form a subassembly (block 306), connecting the dome wall 46 of the subassembly to a combustor liner 40 (block 308); and fixing (e.g., rigidly fixing) a nozzle tube 70 of the fuel nozzle 38 of the subassembly to an inner surface 112 of a casing 29 (block 310). In some configurations, the manifold tubes 80-84 can be fixed to the plurality of swirlers 100 (block 306) prior to fixing the swirlers 100 to the dome wall 46 (block 304).

In some configurations, one or more portions of the fuel nozzle 38, the dome assembly 44, and the swirlers 100 can be pre-assembled as a subassembly. For example, the swirlers 100 can be fixed to (e.g., brazed with) the dome wall 46 of the dome assembly 44 and manifold tubes 80-86 of the fuel nozzle 38 can be fixed (e.g., bolted, brazed, welded, riveted, fastened, etc.) to the swirlers 100 to form a subassembly. The subassembly can then be connected to other parts of the turbine engine 10. For example, the dome wall 46 can be connected to the combustor liner 40 and the nozzle tube 70 can be fixed (e.g., bolted, brazed, welded, riveted, fastened, etc.) to an inner surface 112 of the casing 29.

The term "nozzle" has been used in various ways in the context of gas turbine engines. In the instant application, "nozzle" refers to a component having a portion for fluid coupling to a fuel supply and having a plurality of portions for fluidly coupling with respective combustor cups 31. Distal ends of the nozzle 38 can have nozzle tips 86, but are not referred to as nozzles themselves.

Rigidly fixing two elements together includes fixing the elements such that they do not move relative to each other. Non-rigidly fixing two elements together includes connecting two elements such that the two elements can move, at least to some degree, relative to each other. For example, a first element could be fixed to a second element such that the first element can rotate relative to the second element (e.g., be rotatably fixed), but that first element would not be rigidly fixed to the second element.

Many other possible aspects and configurations in addition to those shown in the above figures are contemplated by the present disclosure. Examples of fuel nozzles disclosed herein can be coupled with a plurality of combustor cups, be fixed to the dome wall, be fixed to the casing, include one or more insulated tubes, or a combination thereof. The aspects disclosed herein can reduce the number of casing holes 110 and fix relative positions of the fuel nozzle 38, the swirlers 100, and the dome wall 46. Additionally or alternatively, the aspects disclosed herein can help maintain fuel temperatures. The technical effect is that the strength of the casing 29 is increased and consistent flame distribution is provided.

Further aspects are provided by the subject matter of the following clauses:

A gas turbine engine comprising: a combustion section enshrouded by a casing, the combustion section comprising: an annular combustion chamber defined by at least a dome wall and an annular liner; a plurality of combustor cups circumferentially arranged on the dome wall; a fuel supply connected to the casing; and a fuel nozzle passing through the casing and having a nozzle tube and a distribution manifold fluidly coupling the nozzle tube to at least two combustor cups of the plurality of combustor cups; wherein the fuel nozzle is fixed to the at least two combustor cups.

The gas turbine engine of any preceding clause, wherein the fuel nozzle is rigidly fixed to an inner surface of the casing and is rigidly fixed to the at least two combustor cups.

The gas turbine engine of any preceding clause, wherein the plurality of combustor cups includes a first combustor cup and a second combustor cup; wherein the first combustor cup includes a first swirler fixed to the dome wall; wherein the second combustor cup includes a second swirler fixed to the dome wall; and wherein the fuel nozzle is fixed to the first swirler and the second swirler.

The gas turbine engine any preceding clause, wherein the fuel nozzle is fixed to an inner surface of the casing.

The gas turbine engine of any preceding clause, wherein the distribution manifold comprises (i) a first manifold tube fluidly coupled the nozzle tube and the first swirler, and (ii) a second manifold tube fluidly coupled with the nozzle tube and the second swirler.

The gas turbine engine of any preceding clause, wherein the first manifold tube comprises a first mounting flange rigidly mounted to the first swirler; and wherein the second manifold tube comprises a second mounting flange rigidly mounted to the second swirler.

The gas turbine engine of any preceding clause, wherein the nozzle tube comprises a nozzle tube mounting flange adapted for connection with an inner surface of a casing of the combustion section.

The gas turbine engine of any preceding clause, wherein the first swirler includes a first swirler mating surface; and a shape of the first swirler mating surface corresponds to a shape of the first mounting flange.

The gas turbine engine of preceding clause, wherein a diameter of the nozzle tube is larger than a diameter of the first manifold tube.

The gas turbine engine of preceding clause, wherein the first manifold tube comprises a dual wall configuration and an insulator.

The gas turbine engine of preceding clause, wherein the plurality of combustor cups includes a first combustor cup, a second combustor cup, and a third combustor cup; wherein the combustion section further comprises a first swirler connected to the first combustor cup, a second swirler connected to the second combustor cup, and a third swirler connected to the third combustor cup; and wherein the fuel nozzle is fixed to the first swirler, the second swirler, and the third swirler.

The gas turbine engine of preceding clause, wherein the plurality of combustor cups includes a first set of combustor cups comprising at least four combustor cups; wherein the combustion section further comprises a first set of swirlers comprising a swirler for each combustor cup of the first set of combustor cups; and wherein the fuel nozzle is fixed to each swirler of the first set of swirlers.

The gas turbine engine of preceding clause, further comprising an additional fuel nozzle fluidly coupled to the fuel supply and to at least two additional combustor cups of the plurality of combustor cups.

The gas turbine engine of preceding clause, further comprising at least two additional fuel nozzles each fluidly coupled to the fuel supply and to at least two respective additional combustor cups of the plurality of combustor cups.

The gas turbine engine of preceding clause, wherein the casing comprises a plurality of casing holes, the fuel supply is connected to the plurality of casing holes, and wherein a total number of casing holes of the plurality of casing holes is less than a total number of combustor cups of the plurality of combustor cups.

The gas turbine engine of preceding clause, wherein the fuel nozzle is configured for use with hydrogen.

The gas turbine engine of preceding clause, wherein the at least two combustor cups comprise three or more combustor cups.

The gas turbine engine of preceding clause, wherein the at least two combustor cups comprise five combustor cups.

An aircraft including the gas turbine engine of preceding clause.

A fuel nozzle for a combustion section of a gas turbine engine, the fuel nozzle comprising: a nozzle tube; a first manifold tube fluidly coupled to the nozzle tube; a second manifold tube fluidly coupled to the nozzle tube; a first swirler fixed to the first manifold tube and connected with a dome wall of the combustion section; and a second swirler fixed to the second manifold tube and connected with the dome wall.

The fuel nozzle of preceding clause, wherein the first manifold tube comprises a first mounting flange rigidly mounted to the first swirler, and the second manifold tube comprises a second mounting flange rigidly mounted to the second swirler.

The fuel nozzle of preceding clause, wherein the nozzle tube comprises a nozzle tube mounting flange adapted for connection with an inner surface of a casing of the combustion section.

The fuel nozzle of preceding clause, wherein the first swirler includes a first swirler mating surface; and a shape of the first swirler mating surface corresponds to a shape of the first mounting flange.

The fuel nozzle of preceding clause, wherein the first swirler and the second swirler are rigidly fixed the dome wall.

The fuel nozzle of preceding clause, further comprising a third manifold tube fluidly coupled to the nozzle tube and a third swirler.

The fuel nozzle of preceding clause, further comprising a plurality of additional manifold tubes fluidly coupled, at least indirectly, to the nozzle tube and rigidly fixed to respective additional swirlers.

The fuel nozzle of preceding clause, wherein the first manifold tube and the second manifold tube comprise a dual wall configuration and an insulator.

A gas turbine engine comprising the fuel nozzle of any preceding clause.

A method of assembling the gas turbine engine of any preceding clause, the method comprising: fixing a plurality of swirlers to a dome wall of a dome assembly; fixing manifold tubes of the fuel nozzle to the plurality of swirlers to form a subassembly; connecting the dome wall of the subassembly to a combustor liner; and fixing a nozzle tube of the fuel nozzle of the subassembly to an inner surface of a casing.

A method of assembling a gas turbine engine, the method comprising: fixing a plurality of swirlers to a dome wall of a dome assembly; fixing manifold tubes of a fuel nozzle to the plurality of swirlers to form a subassembly; connecting the dome wall of the subassembly to a combustor liner; and fixing a nozzle tube of the fuel nozzle of the subassembly to an inner surface of a casing.

A gas turbine engine comprising: a compressor section, a combustion section, and a turbine section in a serial flow arrangement, the combustion section comprising: a combustion chamber defined by at least a dome wall and a liner; a plurality of combustor cups arranged on the dome wall; and a fuel nozzle fluidly coupled to one or more combustor cups of the plurality of combustor cups; wherein the fuel nozzle includes a thermal insulator.

The gas turbine engine of any preceding clause, wherein the fuel nozzle includes a dual wall configuration having an outer wall and an inner wall that define an inner space.

The gas turbine engine of any preceding clause, wherein the thermal insulator is disposed in the inner space.

The gas turbine engine of any preceding clause, wherein the thermal insulator comprises an aerogel, fiberglass, or both.

The gas turbine engine of any preceding clause, wherein the fuel nozzle includes a thermal barrier coating disposed on the outer wall, the inner wall, or both the inner wall and the outer wall.

The gas turbine engine of any preceding clause, wherein the thermal insulator is contact with the outer wall.

The gas turbine engine of any preceding clause, wherein the thermal insulator is in contact with the inner wall.

The gas turbine engine of any preceding clause, wherein the thermal insulator is in contact with the inner wall and the outer wall.

The gas turbine engine of any preceding clause, wherein the thermal insulator includes a thermally insulating material connected to a shell.

The gas turbine engine of any preceding clause, wherein the shell comprises metal.

The gas turbine engine of any preceding clause, wherein the outer wall and the shell comprise a common material.

The gas turbine engine of any preceding clause, wherein the shell includes a thermal barrier coating.

The gas turbine engine of any preceding clause wherein the inner wall, the outer wall, and the shell include thermal barrier coatings.

The gas turbine engine of any preceding clause, wherein the fuel nozzle includes a fluid opening and the thermal insulator is disposed to restrict fluid flow from the fluid opening in the inner space.

The gas turbine engine of any preceding clause, wherein the thermal insulator comprises a honeycomb structure.

The gas turbine engine of any preceding clause, wherein the thermal insulators include a plurality of separate sections.

The gas turbine engine of any preceding clause, wherein the plurality of separate sections include one or more discs.

The gas turbine engine of any preceding clause, wherein the fuel nozzle includes an injection orifice for receiving a material of the thermal insulator, the injection orifice fluidly coupled to the inner space.

The gas turbine engine of any preceding clause, wherein the fuel nozzle includes a cap fluidly sealing the injection orifice.

The gas turbine engine of any preceding clause, wherein the fuel nozzle includes a nozzle tube and a distribution manifold, the distribution manifold including a plurality of manifold tubes.

The gas turbine engine of any preceding clause wherein the nozzle tube comprises the outer wall and the inner wall.

The gas turbine engine of any preceding clause, wherein at least one manifold tube of the plurality of manifold tubes includes a manifold tube outer wall, a manifold tube inner wall, and a manifold insulator disposed between the manifold tube outer wall and manifold tube inner wall.

The gas turbine engine of any preceding clause, wherein the fuel nozzle is rigidly fixed to at least one combustor cup of the plurality of combustor cups.

A method of assembling a fuel nozzle for a gas turbine engine, the method comprising: providing an outer wall defining an outer wall space; inserting an insulator into the outer wall space; inserting an inner wall into the outer wall space; and connecting at least one of the outer wall or the inner wall to a flange.

The method of any preceding clause, wherein the insulator is inserted into the outer wall space before the inner wall.

The method of any preceding clause, wherein the inner wall is inserted into the outer wall space before the insulator; wherein the inner wall and the outer wall define an inner space; and wherein the thermal insulator is inserted into the inner space.

The method of any preceding clause, wherein inserting the insulator includes injecting insulating material of the insulator into an inner space between the outer wall and the inner wall.

The method of any preceding clause wherein injecting the insulating material of the insulator includes injecting the insulating material into an injection orifice of the fuel nozzle.

The method of any preceding clause, wherein the insulator includes an insulating material disposed on a shell, and inserting the insulator into the outer wall includes inserting the insulating material and the shell into the outer wall.

The method of any preceding clause, wherein providing the outer wall includes applying a thermal barrier coating to the outer wall space.

The method of any preceding clause, wherein the inner wall includes a second thermal barrier coating.

While described with respect to a turbine engine, it should be appreciated that the combustor as described herein can be for any engine with a having a combustor. It should be appreciated that application of aspects of the disclosure discussed herein are applicable to engines with propeller sections or fan and booster sections along with turbojets and turbo engines as well.

To the extent not already described, the different features and structures of the various embodiments can be used in combination, or in substitution with each other as desired. That one feature is not illustrated in all of the embodiments is not meant to be construed that it cannot be so illustrated, but is done for brevity of description. Thus, the various features of the different embodiments can be mixed and matched as desired to form new embodiments, whether or not the new embodiments are expressly described. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A gas turbine engine (10) comprising:
a combustion section (14) enshrouded by a casing (29), the combustion section (14) comprising:
an annular combustion chamber (50) defined by at least a dome wall (46) and an annular liner (40);
a plurality of combustor cups (31) circumferentially arranged on the dome wall (46);
a fuel supply (34) coupled to the casing (29); and
a fuel nozzle (38) passing through the casing (29) and having a nozzle tube (70) and a distribution manifold (72) fluidly coupling the nozzle tube (70) to at least two combustor cups (31) of the plurality of combustor cups (31);
wherein the fuel nozzle (38) is fixed to the at least two combustor cups (31).

2. The gas turbine engine (10) of claim 1, wherein the fuel nozzle (38) is rigidly fixed to an inner surface (112) of the casing (29) and is rigidly fixed to the at least two combustor cups (31).

3. The gas turbine engine (10) of any preceding claim, wherein the plurality of combustor cups (31) includes a first combustor cup (31a) and a second combustor cup (31b);
wherein the first combustor cup (31a) includes a first swirler (100) fixed to the dome wall (46);
wherein the second combustor cup (31) includes a second swirler (100) fixed to the dome wall (46); and
wherein the fuel nozzle (38) is fixed to the first swirler (100) and the second swirler (100).

4. The gas turbine engine (10) of claim 3, wherein the fuel nozzle (38) is fixed to an inner surface (112) of the casing (29).

5. The gas turbine engine (10) of claim 3, wherein the distribution manifold (72) comprises (i) a first manifold tube (80) fluidly coupled with the nozzle tube (70) and the first swirler (100), and (ii) a second manifold tube (82) fluidly coupled with the nozzle tube (70) and the second swirler (100).

6. The gas turbine engine (10) of claim 5, wherein the first manifold tube (80) comprises a first mounting flange (90) rigidly mounted to the first swirler (100); and
wherein the second manifold tube (82) comprises a second mounting flange (90) rigidly mounted to the second swirler (100).

7. The gas turbine engine (10) of claim 6, wherein the nozzle tube (70) comprises a nozzle tube (70) mounting flange (124) adapted for connection with an inner surface (112) of a casing (29) of the combustion section (14).

8. The gas turbine engine (10) of claim 7, wherein the first swirler (100) includes a first swirler (100) mating surface (150); and
a shape of the first swirler (100) mating surface (150) corresponds to a shape of the first mounting flange (90).

9. The gas turbine engine (10) of claim 5, wherein a diameter of the nozzle tube (70) is larger than a diameter of the first manifold tube 80.

10. The gas turbine engine (10) of claim 5, wherein the first manifold tube (80) comprises a dual wall configuration and an insulator (168).

11. The gas turbine engine (10) of claim 1, wherein the plurality of combustor cups (31) includes a first combustor cup (31a), a second combustor cup (31b), and a third combustor cup (31 c);
wherein the combustion section (14) further comprises a first swirler (100) connected to the first combustor cup (31a), a second swirler (100) connected to the second combustor cup (31b), and a third swirler (100) connected to the third combustor cup (31c); and
wherein the fuel nozzle (38) is fixed to the first swirler (100), the second swirler (100), and the third swirler (100).

12. The gas turbine engine (10) of claim 1, wherein the plurality of combustor cups (31) includes a first set of combustor cups (31) comprising at least four combustor cups (31a, 31b, 31c, 31d);
wherein the combustion section (14) further comprises a first set of swirlers (100) comprising a swirler (100) for each combustor cup (31) of the first set of combustor cups (31); and
wherein the fuel nozzle (38) is fixed to each swirler (100) of the first set of swirlers (100).

13. The gas turbine engine (10) of any preceding claim, further comprising an additional fuel nozzle (38) fluidly coupled to the fuel supply (34) and to at least two additional combustor cups (31) of the plurality of combustor cups (31).

14. The gas turbine engine (10) of any preceding claim, further comprising at least two additional fuel nozzles (38) each fluidly coupled to the fuel supply (34) and to at least two respective additional combustor cups (31) of the plurality of combustor cups (31).

15. The gas turbine engine (10) of any preceding claim, wherein:
the casing (29) comprises a plurality of casing holes (110),
the fuel supply (34) is connected to the plurality of casing holes (110), and
a total number of casing holes (110) of the plurality of casing holes (110) is less than a total number of combustor cups (31) of the plurality of combustor cups (31).
